# EUROPÄISCHE PATENTSCHRIFT

(11) **EP 0 969 221 B1**
(45) Veröffentlichungstag und Bekanntmachung des Hinweises auf die Patenterteilung: **05.11.2003**
(21) Anmeldenummer: 99110627.9
(22) Anmeldetag: 02.06.1999
(51) Int. Cl.: F16F 9/02

(54) **Längenverstellbare Gasfeder**
Lengthwise-adjustable gas spring
Ressort à gaz réglable en longueur

(30) Priorität: 30.06.1998 DE 29811639 U
(43) Veröffentlichungstag der Anmeldung: 05.01.2000
(73) Patentinhaber: SUSPA Compart GmbH, 92237 Sulzbach-Rosenberg (DE)
(72) Erfinder: Weisser, Frank, 91257 Pegnitz (DE); Werner, Michael, 95473 Creussen (DE); Westermayer, Stephan, 92224 Amberg (DE); Böhm, Fred, 95119 Naila (DE)
(74) Vertreter: Rau, Manfred, Dr. Dipl.-Ing.

(56) Entgegenhaltungen:
- EP-A- 0 595 357
- EP-A- 0 789 157
- DE-A- 19 515 368
- DE-A- 19 716 720

## Beschreibung

Die Erfindung betrifft eine längenverstellbare Gasfeder nach dem Obergriff des Anspruches 1. Eine derartige aus der EP 0 789 157 A bekannte längenverstellbare Gasfeder weist eine pneumatische Auslöseeinrichtung bzw. eine mechanische auf Zug und Druck wirkende Auslöseeinrichtung auf, die auch einen Bowdenzug aufweisen kann. Beide Auslöseeinrichtungen sind verhältnismäßig aufwendig.

Der Erfindung liegt daher die Aufgabe zugrunde, die Gasfeder der gattungsgemäßen Art mit einer Auslöseeinrichtung zu versehen, die in ihrem Aufbau besonders einfach ist und die einfach zu bedienen ist.

Diese Aufgabe wird erfindungsgemäß durch die Merkmale im Kennzeichnungsteil des Anspruches 1 gelöst. Der Bowdenzug ist ein besonders einfaches und robustes Bauteil. Zum Öffnen des Ventils muß lediglich eine Kraft in einer Richtung ausgeübt werden; die Rückstellung erfolgt in der Regel durch die inneren, am Betätigungshebel angreifenden Kräfte. Die Unteransprüche geben besonders vorteilhafte und zum Teil erfinderische Ausgestaltungen wieder. Die Weiterbildung nach Anspruch 4 ermöglicht es, daß die Auslöseeinrichtung mit Betätigungseinrichtung als selbständiges Bauteil gefertigt werden kann.

Weitere Merkmale, Vorteile und Einzelheiten der Erfindung ergeben sich aus der nachfolgenden Beschreibung eines Ausführungsbeispieles der Erfindung anhand der Zeichnung. Es zeigt:
- Fig. 1: eine längenverstellbare Gasfeder in teilweise aufgebrochener Darstellung,
- Fig. 2: einen Längsschnitt durch den Ventil-Bereich der Gasfeder mit Auslöseeinrichtung in geschlossenem Zustand des Ventils,
- Fig. 3: eine Draufsicht auf die Gasfeder gemäß dem Sichtpfeil III in Fig. 2
- Fig. 4: einen der Darstellung in Fig. 2 entsprechenden Längsschnitt durch den Ventilbereich der Gasfeder bei geöffnetem Ventil und
- Fig. 5: eine Draufsicht auf die Gasfeder gemäß dem Sichtpfeil V in Fig. 4.

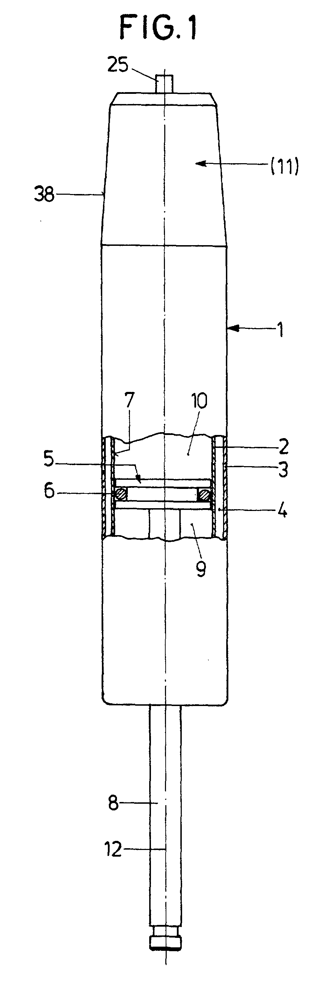

In Fig. 1 ist eine längenverstellbare Gasfeder dargestellt, wie sie bekannt ist. Sie weist eine Gehäuse 1 auf, das im wesentlichen aus zwei konzentrisch ineinander gelagerten Rohren mit unterschiedlichem Durchmesser, nämlich einem Innenzylinder 2 und einem Außenzylinder 3 besteht. Zwischen dem Außenzylinder 3 und dem Innenzylinder 2 ist aufgrund des unterschiedlichen Durchmessers von Innenzylinder 2 und Außenzylinder 3 ein Ringraum 4 ausgebildet.

In dem Innenzylinder 2 ist ein etwa ringförmiger Kolben 5 axial verschiebbar angeordnet, der über einen Dichtungsring 6 gasdicht mit seinem Außenumfang gegenüber der Innenwand 7 des Innenzylinders 2 abgedichtet ist. Der Kolben 5 ist an einem Ende einer koaxial im Gehäuse 1 geführten Kolbenstange 8 befestigt. Diese Kolbenstange 8 ist aus einem Ende des Gehäuses 1 abgedichtet herausgeführt. Der Kolben 5 teilt den Innenraum des Innenzylinders 2 in zwei Teil-Gehäuseräume 9, 10. Der dem Kolbenstangenaustritt zugewandte Teil-Gehäuseraum 9 ist ständig mit dem Ringraum 4 über eine in der Zeichnung nicht dargestellte Verbindungsöffnung verbunden.

An dem dem Kolbenstangenaustritt entgegengesetzten Ende des Gehäuses 1 ist ein Ventil 11 angeordnet, mittels dessen der im Innenzylinder 2 zwischen dem Kolben 5 und dem Ventil 11 befindliche Teil-Gehäuseraum 10 mit dem Ringraum 4 und damit mit dem anderen Teil-Gehäuseraum 9 verbunden bzw. von diesem getrennt werden kann. Die gesamte Gasfeder einschließlich des Ventils 11 ist im wesentlichen symmetrisch zur MittelLängsachse 12 aufgebaut.

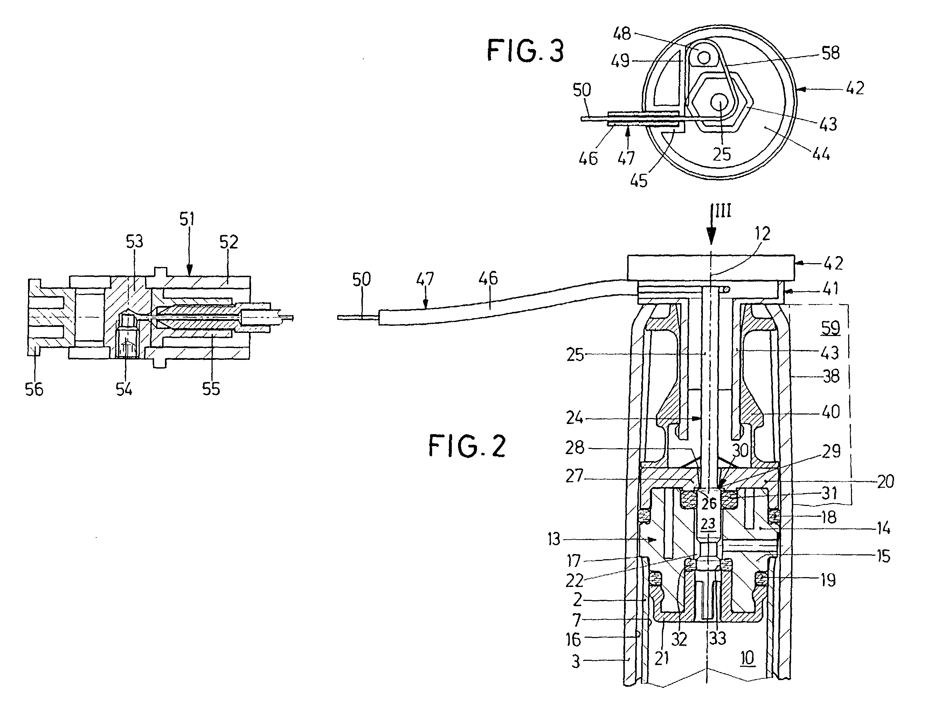

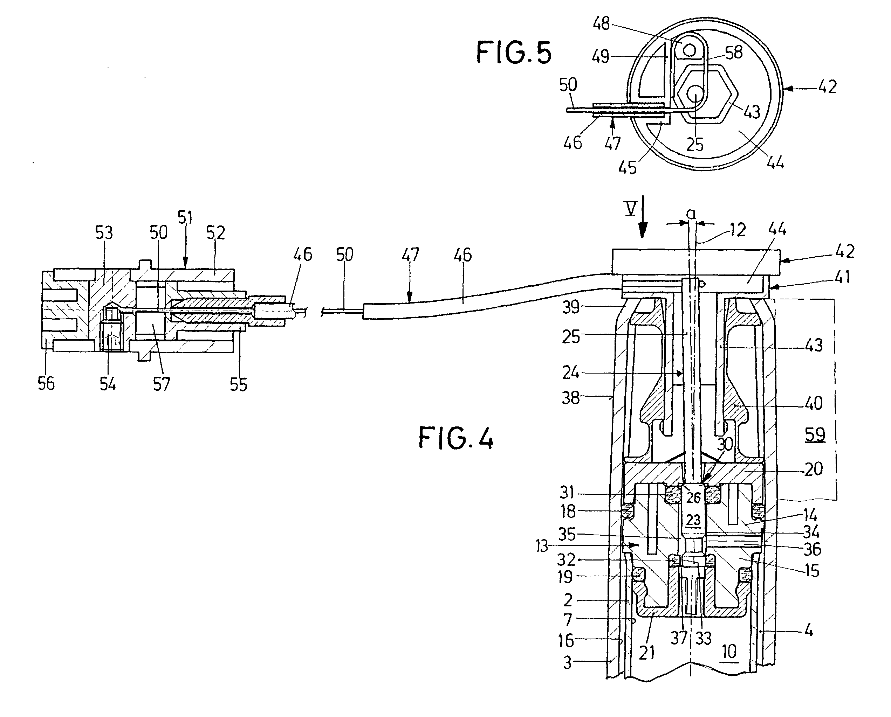

Das Ventil 11 weist - wie insbesondere aus Fig. 2 und Fig. 4 hervorgeht - einen Ventilkörper 13 auf, der aus einem äußeren Abschnitt 14 und einem inneren Abschnitt 15 gebildet ist. Der äußere Abschnitt 14 liegt gegen die Innenwand 16 des Außenzylinders 3 an, wodurch der Ventilkörper 13 relativ zum Außenzylinder 3 zentriert wird. Der ebenfalls zylindrische innere Abschnitt 15 geringeren Durchmessers liegt gegen die Innenwand 7 des Innenzylinders 2 an, wodurch eine Zentrierung zwischen Ventilkörper 13 und Innenzylinder 2 und damit auch zwischen Innenzylinder 2 und Außenzylinder 3 erfolgt. Im Übergangsbereich von äußerem Abschnitt 14 zum inneren Abschnitt 15 ist ein Anschlagbund 17 ausgebildet, mittels dessen der Ventilkörper 13 in axialer Richtung gegen den Innenzylinder 2 anliegt. Im Bereich des äußeren Abschnitts 14 und des inneren Abschnitts 15 sind Ringdichtungen 18, 19 angeordnet, mittels derer eine jeweils gasdichte Verbindung zwischen dem äußeren Abschnitt 14 und der Innenwand 16 des Außenzylinders 3 einerseits und zwischen dem inneren Abschnitt 15 und der Innenwand 7 des Innenzylinders 2 andererseits erreicht wird. Die dem äußeren Abschnitt 14 zugeordnete Ringdichtung 18 wird durch einen auf den äußeren Abschnitt 14 aufgesetzten topfförmigen äußeren Deckel 20 des Ventilkörpers 13 gehalten. Die dem inneren Abschnitt 15 zugeordnete Ringdichtung 19 wird durch einen auf den inneren Abschnitt 15 aufgesetzten, dem Teil-Gehäuseraum 10 zugewandten inneren Deckel 21 des Ventilkörpers 13 gehalten. Der Ventilkörper 13 und die Deckel 20, 21 bestehen in der Regel aus einem geeigneten Kunststoff und sind durch Kleben, Ultraschallschweißen oder Preß-, Rast- oder Schnappverbindungen miteinander verbunden.

Der Ventilkörper 13 ist konzentrisch zur Achse 12 mit einer zylindrischen Ausnehmung 22 versehen, in der ein ebenfalls zylindrisch ausgebildeter innerer Arm 23 eines doppelarmig ausgebildeten Ventil-Betätigungshebels 24 angeordnet ist, dessen anderer äußerer Arm 25 im wesentlichen außerhalb des Ventilkörpers 13 angeordnet ist. Der Betätigungshebel 24 ist mittels eines zwischen dem inneren Arm 23 mit einem größeren Durchmesser und dem äußeren Arm 25 mit einem kleineren Durchmesser ausgebildeten Ringbundes 26 gegen ein Widerlager 27 abgestützt, das durch den Deckel 20 gebildet ist. Der Deckel 20 weist hierzu eine zur Achse 12 konzentrische Öffnung 28 auf, die sich nach außen, also zum äußeren Arm 25 hin, erweitert. Sie weist also auf ihrer dem inneren Arm 23 des Betätigungshebels 24 zugewandten Seite einen Lagerbund 29 auf, gegen den sich der Ringbund 26 des Betätigungshebels 24 abstützt. Der in seiner Ruhelage gemäß Fig. 2 konzentrisch zur Achse 12 verlaufende Betätigungshebel 24 kann um das durch den Lagerbund 29 und dem Ringbund 26 gebildete Schwenklager 30 gegenüber der Achse 12 verschwenkt werden, wie es in Fig. 4 angedeutet ist.

Im äußeren Abschnitt 14 des Ventilkörpers 13 ist eine durch das Widerlager 27, also den Deckel 20, gehaltene Ringdichtung 31 angeordnet. Diese Ringdichtung 31 ist also unmittelbar benachbart zum Schwenklager 30 angeordnet. Auch bei Verschwenkungen des Betätigungshebels 24 dichtet sie stets die zylindrische Ausnehmung 22 nach außen hin ab, verhindert also einen Austritt von Druckgas aus dem Gehäuse 1 nach außen. In dem dem Teil-Gehäuseraum 10 zugewandten Bereich des inneren Abschnitts 15 des Ventilkörpers 13 ist eine Ringdichtung 32 angeordnet, die in der in Fig. 2 dargestellten Ruhelage des Betätigungshebels 24, in der dieser konzentrisch zur Achse 12 angeordnet ist, dichtend gegen den inneren Arm 23 des Betätigungshebels 24 anliegt, wobei die Fläche, mit der der innere Arm 23 gegen diese Ringdichtung 32 anliegt, eine Ventil-Sitzfläche 33 bildet.

Bei der in Fig. 4 dargestellten maximalen Verschwenkung des Betätigungshebels 24 um das Schwenklager 30 kommt der innere Arm 23 zur Anlage gegen die Wand der zylindrischen Ausnehmung 22, wo also insoweit ein Anschlag 34 gebildet wird. Wie die Fig. 2 und 4 erkennen lassen, ist die zylindrische Ausnehmung 22 weiter als der innere Arm 23 des Betätigungshebels 24, wodurch die geschilderte Verschwenkbarkeit ermöglicht wird und wodurch zwischen der Wand dieser zylindrischen Ausnehmung 22 und dem inneren Arm 23 ein Kanal 35 gebildet wird, in den ein im äußeren Abschnitt 14 ausgebildeter, etwa radial zur Achse 12 verlaufender Überstromkanal 36 einmündet, der den Ringraum 4 mit dem Kanal 35 verbindet.

Die Ringdichtung 32 ist derart dimensioniert, daß beim Verschwenken des Betätigungshebels 24 bis gegen den Anschlag 34 die Ventilsitzfläche 33 des inneren Arms 23 auf der dem Anschlag 34 diametral gegenüberliegenden Seite soweit von der Ringdichtung 32 abhebt, daß dort ein kleiner Spalt 37 gebildet wird, durch den Druckgas aus dem Teil-Gehäuseraum 10 durch den Spalt 37, den Kanal 35, den Überstromkanal 36 und den Ringraum 4 in den Teil-Gehäuseraum 9 oder umgekehrt strömen kann. Wenn dagegen der Betätigungshebel 24 sich in seiner Ruhelage befindet, dann liegt die Ringdichtung 32 rundum dichtend gegen die Ventil-Sitzfläche 33 an, so daß also kein Spalt 37 gebildet ist. Die Verschwenkbewegung des Betätigungshebels 24 um das Schwenklager 30 liegt im Bereich eines Schwenkwinkels a von 2 bis 3 °.

Das Gehäuse 1 weist in seinem in der Zeichnung oberen, dem Austritt der Kolbenstange entgegengesetzten Bereich einen konisch verjüngten Befestigungsabschnitt 38 auf, dessen Rand 39 nach innen zur Achse 12 hin eingezogen ist. Dieser Rand 39 bildet somit einen Anschlag für eine Distanzhülse 40, gegen die sich wiederum der Ventilkörper 13 in Richtung der Achse 12 abstützt.

In die Distanzhülse 40 ist eine Auslöseeinrichtung 41 für den Ventil-Betätigungshebel 24 eingesetzt. Sie weist ein Gehäuse 42 auf, das mittels eines Mehrkantrohres 43 verdrehfest und durch Rastung in Richtung der Achse 12 in der Distanzhülse 40 gehalten ist. Sie weist weiterhin einen flachen tellerartigen Abschnitt 44 auf, der mit dem Mehrkantrohr 43 einstükkig ausgebildet ist und gegen den Rand 39 anliegt. In dem Gehäuseabschnitt 44 ist - wie den Fig. 3 und 5 entnehmbar ist - eine Halterung 45 für den Außenschlauch 46 eines Bowdenzuges 47 ausgebildet, in der der Außenschlauch 46 in seiner Längsrichtung unverschiebbar gehalten wird. Weiterhin ist in dem Gehäuseabschnitt 44 ein Klemmzapfen 48 angeordnet, zwischen dem und einem Steg 49 des Gehäuseabschnitts 44 der Drahtzug 50 des Bowdenzugs 47 klemmend gehalten ist. Ausgehend von diesem Klemmzapfen 48 ist der Drahtzug 50 um den äußeren Arm 25 des Ventil-Betätigungshebels 24, der in dem Mehrkantrohr 43 in der geschilderten Weise frei verschwenkbar ist, herumgeführt und durch den Außenschlauch 46 zu einer Betätigungseinrichtung 51 geführt. Diese weist eine Hülse 52 auf, in der ein Lagerstück 53 gehalten ist, in dem mittels einer Klemmschraube 54 der Drahtzug 50 des Bowdenzuges 47 festgelegt ist. In der Hülse 52 ist weiterhin ein verschiebbares Lagerstück 55 angeordnet, in dem das zugeordnete Ende des Außenschlauches 46 des Bowdenzuges 47 festgelegt ist. Dieses verschiebbare Lagerstück 55 ist mit einem Betätigungsknopf 56 über einen das Lagerstück 53 übergreifenden Steg 57 verbunden. Beim Eindrücken des Betätigungsknopfes 56 aus der in Fig. 2 dargestellten Stellung in die Hülse 52 hinein wird der Außenschlauch 46 relativ zur Hülse 52 in die in Fig. 4 dargestellte Position verschoben; relativ zum Außenschlauch 46 wird der Drahtzug 50 also in Richtung auf die Betätigungseinrichtung 51 verschoben. Dies führt dazu, daß die in Fig. 3 dargestellte, durch den Drahtzug 50 gebildete Schlaufe 58 in die in Fig. 5 dargestellte Stellung teilweise zusammengezogen wird, wodurch der innere Arm 23 des Betätigungshebels 24 aus seiner in Fig. 3 dargestellten mit der Achse 12 fluchtenden Lage in die in den Fig. 4 und 5 dargestellte ausgeschwenkte Position gezogen wird. Hierbei wird das Ventil 11 geöffnet. Beim Loslassen des Betätigungsknopfes 56 erfolgt die Rückstellung, die beispielsweise durch eine nicht dargestellte Feder in der Betätigungseinrichtung 51 unterstützt werden könnte.

Wie den Fig. 3 und 5 entnehmbar ist, umschlingt der Drahtzug 50 des Bowdenzuges 47 den äußeren Arm 25 des Betätigungshebels 24 bei geschlossenen Ventil 11 um mehr als 90 °, beispielsweise um etwa 110 °, während er bei gemäß Fig. 5 geöffnetem Ventil 11 den äußeren Arm 25 um etwa 90 ° umschlingt. Das Öffnen des Ventils 11 erfolgt also durch Ausübung einer Zugkraft auf den Drahtzug 50.

Die längenverstellbare, zumindest teilweise mit Druckgas gefüllte Gasfeder wird in allgemein üblicher Weise derart eingesetzt, daß der konisch verjüngte Befestigungsabschnitt 38 in einer nur angedeuteten Halteeinrichtung 59 an der Unterseite eines Stuhlsitzes durch Konusklemmung befestigt wird und daß ansonsten das Gehäuse der Gasfeder an einer nicht dargestellten Führungsbüchse eines mit einem Fußgestell verbundenen Standrohres in Richtung der Achse 12 verschiebbar, quer dazu aber geführt angeordnet wird. Die Kolbenstange 8 wird an einem Boden eines solchen Standrohres drehbar befestigt. Diese Ausgestaltung ist ganz allgemeine Praxis.

## Patentansprüche

1. Längenverstellbare Gasfeder
- mit einem Gehäuse (1) mit einer Mittel-Längs-Achse (12),
- mit einer aus dem Gehäuse (1) konzentrisch zur Mittel-Längs-Achse (12) herausgeführten Kolbenstange (8),
- mit einem an der Kolbenstange (8) angebrachten, im Gehäuse (1) verschiebbaren, das Gehäuse (1) in zwei Teil-Gehäuseräume (9, 10) aufteilenden Kolben (5),
- mit einem Ventil (11) zum Verbinden der Teil-Gehäuseräume (9, 10) miteinander,
-- wobei das Ventil (11) einen Ventil-Betätigungshebel (24) aufweist, der
--- als zweiarmiger Hebel mit einem inneren Arm (23) und einem äußeren Arm (25) ausgebildet ist,
--- quer zu seiner Längsrichtung schwenkbar gelagert und durch Verschwenken aus einer Ruhelage in eine Öffnungslage des Ventils (11) bringbar ist und
--- am inneren Arm (23) mit einer Ventil-Sitzfläche (33) versehen ist, die von einer Dichtung (32) unter Bildung eines die Teil-Gehäuseräume (9, 10) verbindenden Spaltes (37) abhebbar ist und
- mit einer am äußeren Arm (25) angreifenden Auslöseeinrichtung, die einen Bowdenzug (47) aufweist,
**dadurch gekennzeichnet,**
**daß** der Außenschlauch (46) des Bowdenzuges (47) gegenüber dem Gehäuse (1) der Gasfeder unverschiebbar gehalten ist,
**daß** der Drahtzug (50) des Bowdenzuges (47) an dem äußeren Arm (25) angreift und
**daß** der Drahtzug (50) den äußeren Arm (25) des Betätigungshebels (24) mit einer Schlaufe (58) teilweise umschlingt.

2. Gasfeder nach Anspruch 1, **dadurch gekennzeichnet,**
**daß** der Drahtzug (50) bei geschlossenem Ventil (11) den äußeren Arm (25) um mehr als 90 °, vorzugsweise 100 - 110 °, umschlingt.

3. Gasfeder nach Anspruch 1 oder 2, **dadurch gekennzeichnet,**
**daß** der Drahtzug (50) bei geöffnetem Ventil (11) den äußeren Arm (25) um etwa 90 ° umschlingt.

4. Gasfeder nach einem der Ansprüche 1 bis 3, **dadurch gekennzeichnet,**
**daß** die Auslöseeinrichtung (41) ein Gehäuse (42) aufweist, in dem der Außenschlauch (46) des Bowdenzugs (47) unverschiebbar gehalten ist und in dem der Drahtzug (50) des Bowdenzuges (47) festgelegt ist und das den äußeren Arm (25) des Betätigungshebels (24) aufnimmt.

## Claims

1. An adjustable length gas spring comprising
- a housing (1) having a central longitudinal axis (12);
- a piston rod (8) extended out of the housing (1) concentrically of the central longitudinal axis (12);
- a piston (5) displaceable in the housing (1) and mounted on the piston rod (8) and dividing the housing (1) into two partial volumes (9, 10);
- a valve (11) for connecting with each other the two partial volumes (9, 10),
-- the valve (11) having a valve operating lever (24),
--- which is a two-armed lever having an inner arm (23) and an outer arm (25),
--- which is mounted pivotally crosswise to its longitudinal direction and movable by pivoting from a position of rest into a position of opening of the valve (11), and
--- which, on its inner arm (23), is provided with a valve seat (33), which can be lifted off a seal (32), thus forming a gap (37) that interconnects the partial volumes (9, 10); and
- a triggering device, having a Bowden cable (47), acting on the outer arm (25)
**characterized**
**in that** the external tube (46) of the Bowden cable (47) is held non-displaceably relative to the housing (1) of the gas spring,
**in that** the wire pull (50) of the Bowden cable (47) acts on the outer arm (25) and
**in that** the wire pull (50) partially winds around the outer arm (25) of the operating lever (24) by a loop (58).

2. A gas spring according to claim 1, **characterized in that** with the valve (11) closed, the wire pull (50) winds around the outer arm (25) by more than 90°, preferably by 100 to 110°.

3. A gas spring according to claim 1 or 2, **characterized in that** with the valve (11) opened, the wire pull (50) winds around the outer arm (25) by approximately 90°.

4. A gas spring according to one of claims 1 to 3, **characterized in that** the triggering device (41) has a housing (42), in which the external tube (46) of the Bowden cable (47) is held non-displaceably, and in which the wire pull (50) of the Bowden cable (47) is fixed and which accommodates the outer arm (25) of the operating lever (24).

## Revendications

1. Ressort à gaz réglable en longueur, avec un carter (1) pourvu d'un axe longitudinal médian (12), avec une tige de piston (8) sortant du carter (1) de manière concentrique à l'axe longitudinal médian (12), avec un piston (5) monté sur la tige de piston (8), pouvant coulisser dans le carter (1) et divisant le carter (1) en deux compartiments partiels de carter (9, 10), avec une valve (11) pour relier les compartiments partiels de carter (9, 10) entre eux, la valve (11) comportant un levier d'actionnement de valve (24), lequel est conformé en levier à deux bras avec un bras intérieur (23) et un bras extérieur (25), est monté pivotant transversalement à sa direction longitudinale et peut être transféré par pivotement d'une position de repos à une position ouverte de la valve (11) et est muni, sur le bras intérieur (23), d'une surface formant siège de valve (33) qui est peut décollée d'un joint (32) en formant un interstice (37) reliant les compartiments partiels de carter (9, 10), et avec un dispositif de déclenchement qui agit sur le bras extérieur (25) et qui comporte une transmission Bowden (47), **caractérisé en ce que** la gaine extérieure (46) de la transmission Bowden (47) est maintenue sans possibilité de coulissement par rapport au carter (1), **en ce que** la transmission par fil (50) de la transmission Bowden (47) agit sur le bras extérieur (25), et **en ce que** la transmission par fil (50) entoure partiellement le bras extérieur (25) du levier d'actionnement (24) avec une boucle (58).

2. Ressort à gaz selon la revendication 1, **caractérisé en ce qu'**à valve (11) fermée la transmission par fil (50) entoure le bras extérieur (25) sur plus de 90°, de préférence sur 100 à 110°.

3. Ressort à gaz selon la revendication 1 ou 2, **caractérisé en ce qu'**à valve ouverte (11) la transmission par fil (50) entoure le bras extérieur (25) sur environ 90°.

4. Ressort à gaz selon une des revendications 1 à 3, **caractérisé en ce que** le dispositif de déclenchement (41) comporte un carter (42) dans lequel la gaine extérieure (46) de la transmission Bowden (47) est maintenue sans possibilité de coulissement, dans lequel la transmission par fil (50) de la transmission Bowden (47) est immobilisée et qui reçoit le bras extérieur (25) du levier d'actionnement (24).
